(19)

**Europäisches Patentamt**
**European Patent Office**
**Office européen des brevets**

(11) **EP 4 597 259 A1**

(12) **EUROPEAN PATENT APPLICATION**

(43) Date of publication:
06.08.2025   Bulletin 2025/32

(21) Application number: 25155198.2

(22) Date of filing: 31.01.2025

(51) International Patent Classification (IPC):
*G06F 1/3206* (2019.01)      *G06F 1/324* (2019.01)

(52) Cooperative Patent Classification (CPC):
H04R 25/305; G06F 1/3206; G06F 1/324;
H04R 25/505; H04R 2460/03

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:   01.02.2024   US 202463548803 P

(71) Applicant: Analog Devices, Inc.
Wilmington, MA 01887 (US)

(72) Inventors:
• MAYER, Christopher
Wilmington, 01887 (US)
• SOLKI, Shahin
Wilmington, 01887 (US)
• JI, Zexi
Wilmington, 01887 (US)

(74) Representative: Yang, Shu
Withers & Rogers LLP
2 London Bridge
London SE1 9RA (GB)

(54) **SOFTWARE-DEFINED POWER EQUALIZATION FOR LOW-FREQUENCY SUPPRESSION IN AUDIO DEVICES**

(57)    According to one non-limiting example of the present disclosure, a method for reducing power fluctuations in an audio device can include receiving, via the audio device, a power profile of an audio frame, the audio device comprising a plurality of digital subsystem circuits, dividing the audio frame into a plurality of windows, for each of the plurality of windows, adjusting a clock frequency of one or more of the plurality of digital subsystem circuits based on a plurality of predetermined clock frequency values set to reduce power fluctuations in the audio frame, and processing the audio frame via the plurality of digital subsystem circuits at the adjusted clock frequencies for each window.

1000

FIG. 10

**(Cont. next page)**

EP 4 597 259 A1

1100

1101 — Set clock frequencies of the plurality of digital subsystem circuits at a fraction of maximum frequency

1102 — Compute average power of each of the plurality of digital subsystem circuits for each window

1103 — Measure power of each of the plurality of digital subsystem circuits for each window

1104 — Adjust windows based on magnitude of power fluctuations

1105 — Adjust frequencies based on difference between measured and average power values

1106 — Repeat blocks 1101-1105 for predefined number of calibration cycles

*FIG. 11*

## Description

This application claims priority to U.S. provisional application number 63/548,803, filed on 1 February 2024.

## BACKGROUND OF THE DISCLOSURE

In audio processing chips and devices, it is common to process batches of samples using digital circuits. With a fixed batch size (i.e., every 32 samples), the processing can typically follow a sequence. During the sequence, various digital circuits are used to perform the different steps of processing, and these circuits use varying amounts of power. The processing can be the same or similar for each sequence, so consequently the power used by the circuits can vary in a pattern repeated with each batch. As an example, if the audio sample rate were 22.05kHz, and the batch size was 32 samples, then the pattern of power fluctuations will occur at a rate of 689Hz. These power fluctuations can couple to inductors in a hearing aid or audio output signal chains and create audio artifacts in the form of whistles or tones, which is undesirable.

## BRIEF DESCRIPTION OF THE FIGURES

FIG. 1A is an example audio device. FIG. 1B shows example audio frames from the audio device of FIG. 1A. FIG. 1C illustrates undesirable tones in the audio device of FIG. 1A, according to examples of present disclosure.

FIG. 2 is an example current flattening technique, according to examples of present disclosure.

FIGS. 3A-3B are examples illustrating dynamic power in digital circuits, according to examples of present disclosure.

FIG. 4 is an example system for reducing power fluctuations in an audio device according to examples of the present disclosure.

FIGS. 5A-5D show example power measurement approaches according to examples of the present disclosure.

FIGS. 6A-6C show example pulse-skipping approaches according to examples of the present disclosure.

FIGS. 7A-7F are various plots describing the performance of the delta-sigma approaches of FIGS. 6A-6B according to examples of the present disclosure.

FIG. 8 shows an example clock tree according to examples of the present disclosure.

FIGS. 9A-9B are example lookup tables according to examples of the present disclosure.

FIG. 10 is a flowchart of an example process for reducing power fluctuations in an audio device according to examples of the present disclosure.

FIG. 11 is a flowchart of an example process for calibrating an audio device for reducing power fluctuations in an audio device according to examples of the present disclosure.

FIGS. 12A-12C, 13A-13C, 14A-14C, 15A-15C, and 16A-16C show simulated waveforms of an audio device according to examples of the present disclosure.

The drawings are not necessarily to scale, or inclusive of all elements of a system, emphasis instead generally being placed upon illustrating the concepts, structures, and techniques sought to be protected herein.

## SUMMARY

The following summary is merely exemplary in nature and is not intended to limit the claimed invention or the applications of its use.

According to one non-limiting example of the present disclosure, a method for reducing power fluctuations in an audio device can include receiving, via the audio device, a power profile of an audio frame, the audio device comprising a plurality of digital subsystem circuits, dividing the audio frame into a plurality of windows, for each of the plurality of windows, adjusting a clock frequency of one or more of the plurality of digital subsystem circuits based on a plurality of predetermined clock frequency values set to reduce power fluctuations in the audio frame, and processing the audio frame via the plurality of digital subsystem circuits at the adjusted clock frequencies for each window.

In some non-limiting examples, the method can include periodically measuring a power value for each of the plurality of digital subsystem circuits for each window, determining a clock frequency for each measured power value, and updating the plurality of predetermined clock frequency values based on determined clock frequencies. In some non-limiting examples, adjusting the clock frequency of each of the plurality of digital subsystem circuits based on the plurality of predetermined clock frequency values can include reading, via a clock generator, the plurality of predetermined clock frequency values from a look-up table. In some non-limiting examples, adjusting the clock frequency of the one or more of the plurality of digital subsystem circuits can include conditionally skipping clock pulses of a trunk clock to generate a clock for each of the one or more of the plurality of digital subsystem circuits.

In some non-limiting examples, the clock generator can include at least one mask register and conditionally skipping the clock pulses of the trunk clock can include skipping the clock pulses via the mask register comprising a bit for each relevant clock period and a density of 1's corresponding to a frequency of an associated generated clock. In some non-limiting examples, the clock generator can include a delta-sigma modulator and conditionally skipping the clock pulses of the trunk clock can include feeding an input representing a percentage of total clock pulses to be generated to the delta-sigma modulator. In some non-limiting examples, feeding the input representing the percentage of total clock pulses to be generated to the delta-sigma modulator can include feeding the input representing the percentage of total clock pulses to be generated to a second-order delta-sigma modulator.

In some non-limiting examples, prior to the adjusting step, the method can include setting a clock frequency of each of the plurality of digital subsystem circuits at a fraction of a respective maximum frequency value, computing, for each window, an average power value of each of the plurality of digital subsystem circuits, measuring, for each window, a power value of each of the plurality of digital subsystem circuits, adjusting a size of at least a portion of the plurality of windows based on a magnitude of power fluctuations, adjusting a frequency of each of the plurality of digital subsystem circuits based on a difference between the respective measured and average power values, and repeating the computing, measuring, and adjusting steps a predefined number of times.

In some non-limiting examples, the plurality of predetermined clock frequency values can be determined by sensing power usage of the plurality of digital subsystem circuits during processing of a plurality of previous audio frames, determining an average power value for each window of each of the plurality of previous audio frames, and determining a clock frequency value for each average power value. In some non-limiting examples, sensing the power usage can include at least one of sensing a parasitic wire resistance of a power supply of the audio device, sensing a voltage drop across at least one header switch of the audio device, sampling a frequency of a switcher in the power supply of the audio device, or monitoring activity of the plurality of digital subsystem circuits via on-chip activity monitors.

According to another non-limiting example of the present disclosure, a processing system for reducing power fluctuations in an audio device can include a processor, and a non-transitory computer-readable storage device storing computer-executable instructions, the instructions when executed by the processor cause the processor to perform operations. The operations can include receiving, via the audio device, a power profile of an audio frame, the audio device comprising a plurality of digital subsystem circuits, dividing the audio frame into a plurality of windows, for each of the plurality of windows, adjusting a clock frequency of one or more of the plurality of digital subsystem circuits based on a plurality of predetermined clock frequency values set to reduce power fluctuations in the audio frame, and processing the audio frame via the plurality of digital subsystem circuits at the adjusted clock frequencies for each window.

In some non-limiting examples, the operations can include periodically measuring a power value for each of the plurality of digital subsystem circuits for each window, determining a clock frequency for each measured power value, and updating the plurality of predetermined clock frequency values based on determined clock frequencies. In some non-limiting examples, adjusting the clock frequency of each of the plurality of digital subsystem circuits based on the plurality of predetermined clock frequency values can include reading, via a clock generator, the plurality of predetermined clock frequency values from a look-up table. In some non-limiting examples, adjusting the clock frequency of the one or more of the plurality of digital subsystem circuits can include conditionally skipping clock pulses of a trunk clock to generate a clock for each of the one or more of the plurality of digital subsystem circuits.

In some non-limiting examples, the clock generator can include at least one mask register and conditionally skipping the clock pulses of the trunk clock can include skipping the clock pulses via the mask register comprising a bit for each relevant clock period and a density of 1's corresponding to a frequency of an associated generated clock. In some non-limiting examples, the clock generator can include a delta-sigma modulator and conditionally skipping the clock pulses of the trunk clock can include feeding an input representing a percentage of total clock pulses to be generated to the delta-sigma modulator. In some non-limiting examples, feeding the input representing the percentage of total clock pulses to be generated to the delta-sigma modulator can include feeding the input representing the percentage of total clock pulses to be generated to a second-order delta-sigma modulator.

In some non-limiting examples, prior to the adjusting step, the operations can include setting a clock frequency of each of the plurality of digital subsystem circuits at a fraction of a respective maximum frequency value, computing, for each window, an average power value of each of the plurality of digital subsystem circuits, measuring, for each window, a power value of each of the plurality of digital subsystem circuits, adjusting a size of at least a portion of the plurality of windows based on a magnitude of power fluctuations, adjusting a frequency of each of the plurality of digital subsystem circuits based on a difference between the respective measured and average power values, and repeating the computing, measuring, and adjusting steps a predefined number of times.

In some non-limiting examples, the plurality of predetermined clock frequency values can be determined by sensing power usage of the plurality of digital subsystem circuits during processing of a plurality of previous audio frames, determining an average power value for each window of each of the plurality of previous audio frames, and determining a clock frequency value for each average power value. In some non-limiting examples, sensing the power usage can include at least one of sensing a parasitic wire resistance of a power supply of the audio device, sensing a voltage drop across at least one header switch of the audio device, sampling a frequency of a switcher in the power supply of the audio device, or monitoring activity of the plurality of digital subsystem circuits via on-chip activity monitors.

**DETAILED DESCRIPTION**

The following detailed description is merely exemplary in nature and is not intended to limit the claimed invention or the applications of its use.

In some non-limiting examples, the present disclosure describes embodiments related to systems and methods for reducing power fluctuations in audio devices. Such non-limiting example systems and methods may involve dividing audio frames into multiple windows and adjusting clock frequencies of digital subsystem circuits within the audio device for each window. These adjustments may be based on predetermined frequency values stored in a lookup table, which may be designed to reduce power fluctuations across the audio frame.

In certain non-limiting example implementations, the system may include a power estimation component that periodically measures power consumption of the digital subsystem circuits. This measured power data may be used to update the predetermined frequency values in the lookup table, allowing the system to adapt to changing power consumption patterns over time. The clock frequency adjustments may be achieved through various pulse-skipping techniques, such as using mask registers or delta-sigma modulators to selectively skip clock pulses from a main system clock.

The disclosed approaches, while non-limiting and exemplary in nature, may offer advantages in audio processing applications, particularly in devices like hearing aids where power fluctuations can lead to undesirable audio artifacts. By smoothing out power consumption across audio frames, the example systems may help reduce or eliminate low-frequency tones or whistles that can result from power fluctuations coupling to inductive components in the audio signal chain. The system may also incorporate calibration processes to optimize window sizes and frequency values for different operating conditions and audio processing requirements.

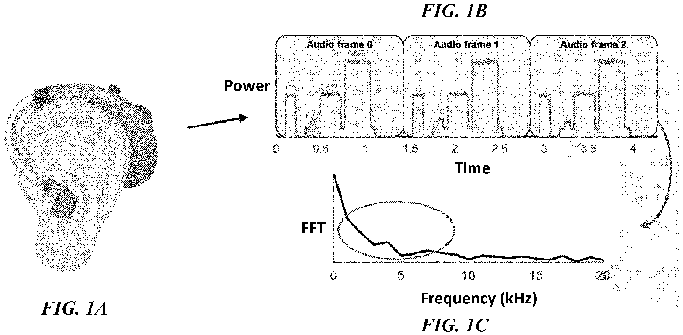

FIGS. 1A-1C illustrate challenges faced by hearing aid devices due to power fluctuations during audio processing in an audio range of between about 20 Hz to 20 kHz. FIG. 1B depicts power waveforms resulting from periodic batch processing of audio frames in the hearing aid, revealing low-frequency fluctuations that occur at regular intervals. These power fluctuations, which may arise from the sequential activation of various digital circuits during audio processing, can create a repeating pattern of power usage. As shown in FIG. 1C, these power fluctuations may couple to inductive components within the hearing aid or audio output signal chain, potentially manifesting as undesirable tones or whistles in the audio output. The circled area in FIG. 1C highlights the presence of these unwanted artifacts in the frequency spectrum, which may degrade the audio quality and user experience of the hearing aid device.

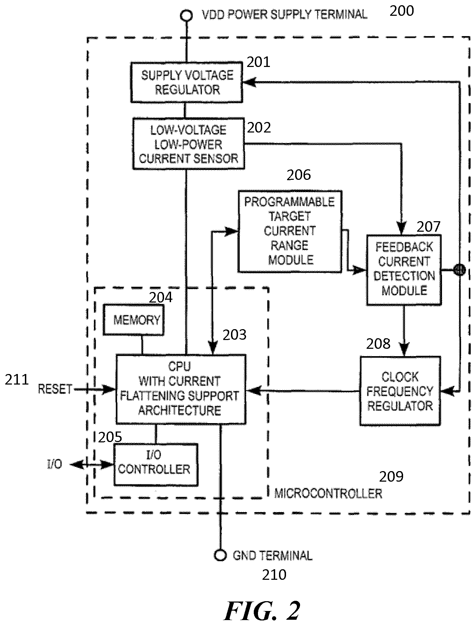

FIG. 2 is an example current flattening technique. The system includes a VDD power supply terminal 200 connected to a supply voltage regulator 201, which feeds into a low-voltage comparator current sensor 202. This sensor 202 interfaces with both a programmable target power range module 206 and a feedback current detection module 207. The system also incorporates a clock frequency regulator 208 that interacts with the feedback current detection module 207 and a CPU 203 with current flattening support architecture. The CPU 203 is connected to memory 204 and an I/O controller 205, with a reset input 211. This configuration may allow for dynamic adjustment of clock frequency and power consumption based on feedback from the current sensor 202. Such a flattening technique was previously introduced for power-side channel protection and utilizes a single power supply 200 and a single clock domain. Moreover, the technique utilizes analog current sensing, feedback control via comparators, and a combination of current injection and frequency reduction to regulate power. Such techniques do not adequately address the specific power fluctuation issues encountered in audio devices with multiple clock domains and complex digital signal processing requirements. Additionally, the analog current sensing approach used in this technique may lack the precision and flexibility needed for fine-grained power management in advanced audio processing chips. The approach also does not take advantage of potentially repetitive activity profiles of tasks. Moreover, current injection generally increases overall power, which is undesirable for battery-operated devices in that it can reduce battery life.

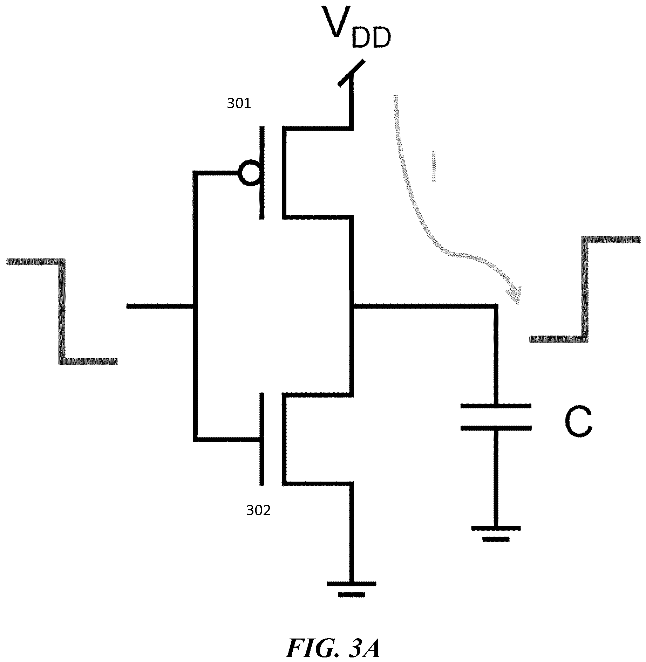

FIGS. 3A-3B are examples illustrating dynamic power in digital circuits, according to examples of present disclosure. Generally, digital circuitry, such as CMOS digital circuitry and the circuit of FIG. 3A (which includes two transistors 301 and 302), can consume power at a rate roughly proportional to the clock frequency of the circuit. The operation of the circuit is governed by the following equations:

$$Q = CV_{DD}$$

$$I_{AVG} = \alpha Q f$$

$$P_{dynamic} = I_{AVG} V_{DD} = \alpha C V_{DD}{}^2 f$$

where $Q$ represents the charge transferred during a clock cycle; $C$ represents the effective capacitance of the circuit; $V_{DD}$ represents the supply voltage; $I_{AVG}$ represents the average current consumed by the circuit; $\alpha$ represents an activity factor that accounts for the fraction of circuit elements switching during a clock cycle; $f$ represents the clock frequency of the circuit; $P_{dynamic}$ may represent the dynamic power consumption of the circuit.

Therefore, control circuits can be used to vary the frequency of digital circuits and, in turn, vary the power output of those circuits. By varying the frequency (and therefore the power output) of such digital circuits, the resulting power fluctuations can be reduced, which can reduce or eliminate the undesired whistles and tones that arise from audio devices.

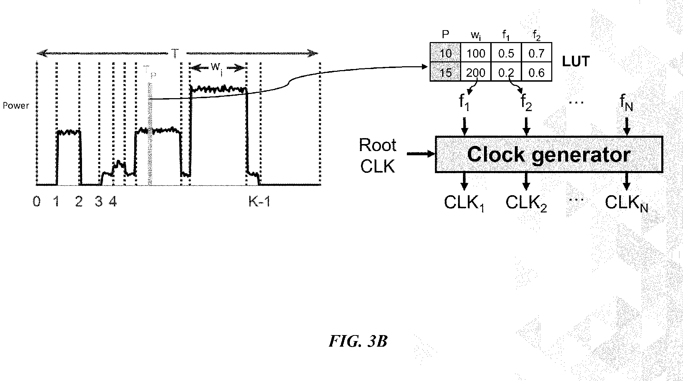

Some non-limiting examples of the present disclosure relate to systems and methods for reducing power fluctuations in audio devices, such as audio devices that utilize various different digital circuits (also referred to herein as "digital subsystem circuits") to perform processing on audio samples that have been divided into frames. FIG. 3B illustrates a method of power equalization in audio devices through clock frequency adjustment. Specifically, FIG. 3B shows a power vs. time graph on the left, showing how a time interval T is divided into smaller windows ($w_i$) marked by vertical dotted lines. On the right, a block diagram depicts the implementation architecture, featuring a Look-Up Table (LUT) containing columns for power (P), window size ($w_i$), and frequency values ($f_1, f_2, ... f_N$). The LUT feeds into a Clock Generator block, which takes a Root CLK input and generates multiple clock outputs (CLK1, CLK2, through CLKN). The method divides time intervals into windows, using the LUT for clock frequencies, measures power, and runs calibration cycles. This approach may allow for dynamic adjustment of clock frequencies in different subsystems to achieve more consistent power consumption across audio processing frames.

In particular, the disclosed, non-limiting example systems can utilize an algorithm that determines ideal clock frequency values for each of the digital subsystem circuits frame by frame. This can cause the power consumed by the audio device as a whole to remain roughly constant (i.e., power fluctuations are reduced) while also ensuring that the required computations are still completed in the required time. Once the frequencies have been determined, various pulse-skipping techniques can be applied to vary the frequency of the various circuits within the device. For example, a trunk digital clock can be utilized that is continuous and running at the highest rate in the system. Starting with the trunk clock, clock pulses can be conditionally skipped to generate multiple clocks that are each used by the various digital subsystem circuits. In some examples, the clocks for the various digital subsystem circuits can be independently generated from the trunk clock, effectively enabling the system to independently clock the various digital subsystem circuits at independent frequencies. As an example, from a 150 MHz trunk clock, the system could generate a 90 MHz clock going to the DSP processor and a 23 MHz clock going to an FFT accelerator block.

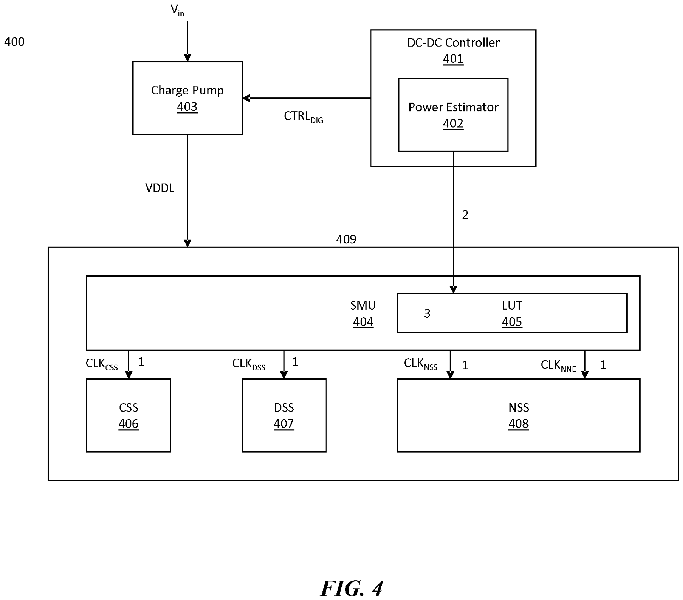

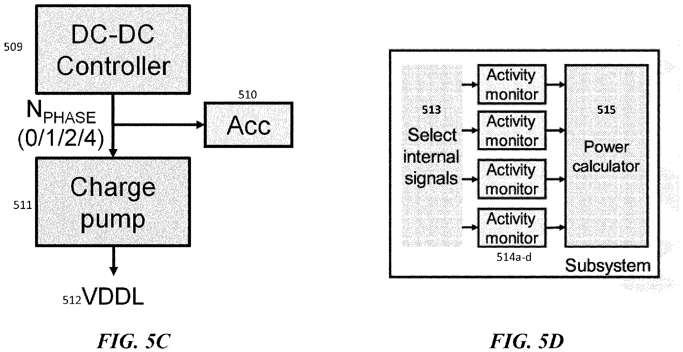

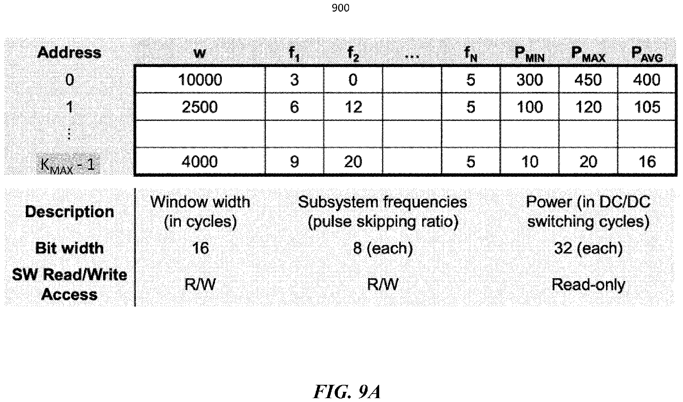

FIG. 4 is an example system 400 for reducing power fluctuations in an audio device according to examples of the present disclosure. FIG. 4 includes a DC-DC controller 401 with a power estimator 402, a charge pump 403, a system management unit (SMU) 404 containing a lookup table (LUT) 405, and multiple digital subsystem circuits 406, 407, and 408 within a processing portion 409. The system 400 can be in addition to or part of an audio device as discussed herein. In some examples, the system 400 can include a DC-DC controller 401, with a power estimator 402 contained therein, and a charge pump 403. The power estimator 402 can estimate power usage of the system 400, and additional details with respect to its operation are discussed in relation to FIGS. 5C and 5D. The charge pump 403 can receive a digital control current from the controller 401 and an input voltage from a power supply, which can be any various types of power supply. The charge pump 403 can provide a VDDL voltage to the processing portion 409. The processing portion 409 can include a system management unit (SMU) 404, with a lookup table (LUT) 405 contained therein, and various digital subsystem clocks a control subsystem (CSS) 406, a digital signal processing subsystem (DSS) 407, and a neural subsystem (NSS) 408 (referred to herein at "digital subsystem clocks"), although these types of subsystems are merely exemplary in nature and various configurations of subsystems are contemplated herein. The various digital subsystem clocks, as discussed above, operate at various different frequencies and process different portions of an audio frame. Moreover, each of the digital subsystem clocks can operate at different frequencies and therefore have differing power outputs. The SMU 404, generally speaking, can provide different clocks for each of the digital subsystem clocks consistent with the examples described herein. Moreover, the LUT 405 can contain various predefined frequency values that the SMU 404 can access. Additional details with respect to the LUT 405 are discussed in relation to FIGS. 9A-9B.

Initially at (1) in FIG. 4, for an audio frame that has been divided into a plurality of windows, at the beginning of each window, the SMU 404 can set the clock of each of the digital subsystem clocks. In some examples, this initial setting of the digital subsystem clock frequencies can be based on looking up frequency values for the LUT 405. At (2), the power estimator 402 can periodically measure power of the processing portion 409 and write the measured power to a new row within the LUT 405. Steps (1) and (2) are repeated for each window in the audio frame. At (3), after new power measurements have been obtained for each window operating under the previous LUT settings via steps (1) and (2), the LUT 405 is further updated with new windows and associated frequency values based on the new power values. This updating process may involve analyzing the measured power data to identify trends or patterns in power consumption across different windows and adjusting the frequency values accordingly. The system may use various algorithms or heuristics to determine optimal window sizes and frequency settings based on the accumulated power measurement data. The entire calibration loop, consisting of steps (1), (2), and (3), can be performed for a predefined number of audio frames and a predefined number of calibration cycles to get the system 400 up to a desired operating point. The predefined number of audio frames and calibration cycles may be determined based on factors such as the complexity of the audio processing tasks and the desired level of power optimization.

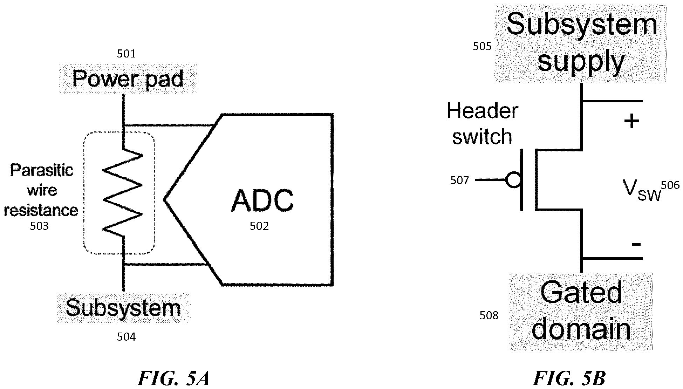

FIGS. 5A-5D show example power measurement approaches according to examples of the present disclosure.

FIG. 5A illustrates a direct power measurement approach that utilizes the inherent parasitic wire resistance of the power supply path to measure current consumption. FIG. 5A includes a power supply pad 501, an analog-to-digital converter (ADC) 502, a parasitic wire resistance 503, and a subsystem circuit 504. In this configuration, a power supply pad 501 is connected to the digital subsystem circuits 504 through a parasitic wire resistance 503. An analog-to-digital converter (ADC) 502 is connected across this parasitic resistance to measure the voltage drop. By measuring this voltage drop, the system may calculate the current flowing through the parasitic resistance using Ohm's law. The power consumption may then be determined by multiplying this current by the supply voltage. This method may take advantage of the existing parasitic resistance in the power supply path, potentially eliminating the need for additional components. In some cases, the system may need to be calibrated to account for variations in the parasitic resistance value.

FIG. 5B illustrates an alternative approach for measuring power consumption in a digital subsystem circuit. FIG. 5B includes a supply circuit 505, a header switch 507, a gated domain circuit 508, and a voltage drop 506 measurement across the header switch. In this configuration, a supply circuit 505 provides power to a gated domain circuit 508 through a header switch 507. The voltage drop 506 across the header switch 507 is measured to calculate the power consumption of the gated domain circuit 508. This method may offer advantages in certain system architectures where header switches are already present for power gating purposes. The voltage drop 506, represented as VSW, can be sensed using various techniques such as analog-to-digital converters or comparators. By monitoring this voltage drop and knowing the characteristics of the header switch 507, the system may accurately estimate the current flowing into the gated domain circuit 508. This approach may provide a non-invasive way to measure power consumption without introducing additional series resistance in the main power path, potentially offering improved efficiency and reduced impact on the circuit's performance compared to other measurement techniques. Moreover, in some embodiments, a system may include multiple header switches (e.g., one header switch per subsystem), and one or more of these may be sensed.

FIG. 5C illustrates an indirect power measurement approach that utilizes charge pump activity monitoring. FIG. 5C includes a DC-DC controller 509, an activity accumulator 510, and a charge pump 511 that generates a voltage supply 512 (VDDL). The system includes a DC-DC controller 509 that generates control signals for a charge pump 511. The charge pump 511 receives these signals and produces a regulated voltage output VDDL 512, which supplies power to the digital subsystem circuits. The output of the DC-DC controller 509 (i.e., the number of phases) is fed to the input of the activity monitor 510 and the input of the charge pump 511. This monitor observes the control signals, particularly the number of active phases or switching cycles, used by the charge pump 511 to generate the required output voltage. By tracking these active phases over time, the activity monitor 510 may estimate the amount of charge transferred by the charge pump 511. This charge transfer information may then be used to calculate the power consumption of the digital subsystem circuits. This method may provide an efficient way to estimate power usage without directly measuring current or voltage in the power supply path, potentially reducing the need for additional sensing components in the main power delivery network.

FIG. 5D includes select signals 513, multiple activity monitors 514A-D, and a power calculator 515. The activity monitors 514A-D may receive select signals 513 from the associated digital subsystem circuits, monitor the outputs, and provide them to a power calculator 515. The power calculator 515 may correlate the outputs with the amount of power being consumed by the respective digital subsystem circuits. This approach may allow for a more granular and distributed power monitoring system, where each subsystem's activity is independently tracked. The select signals 513 may represent various internal states or operations within the digital subsystem circuits that are indicative of power consumption. By analyzing these signals, the activity monitors 514A-D may provide detailed information about the power usage patterns of individual circuit blocks. The power calculator 515 may then aggregate and process this information to generate an overall power consumption estimate for the system, which may be used to inform frequency adjustment decisions in the power equalization process.

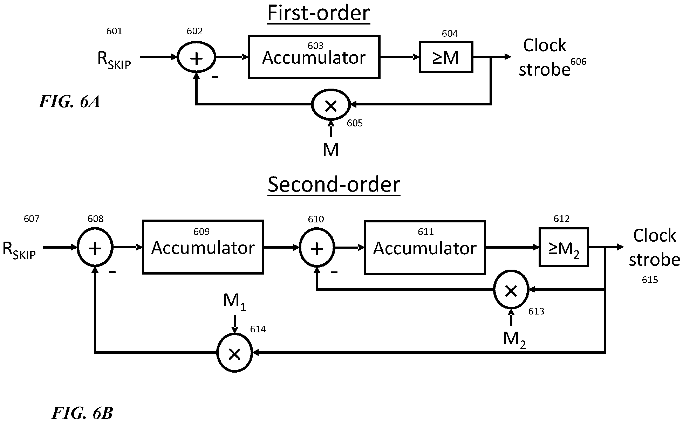

FIGS. 6A-6C show example pulse-skipping approaches according to examples of the present disclosure. As discussed herein, a trunk clock can be used to conditionally skip clock pulses to generate multiple clocks that are used by the various digital subsystem circuits within an audio device. Various types of clock generation circuits can be used to achieve the desired pulse-skipping. For example, a modulator could be used, and two modulator examples are shown in FIGS. 6A and 6B.

FIG. 6A illustrates a first-order delta-sigma modulator architecture for clock generation in a power equalization system. FIG. 6A illustrates a first-order delta-sigma modulator architecture including a skip ratio input 601, a first adder 602, a first accumulator 603, a comparator module 604, a first multiplier 605, and a first clock strobe output 606. The modulator receives a skip ratio input 601, which represents the desired percentage of clock pulses to be generated during a specific period. This input is fed into a first adder 602, which combines it with a feedback signal. The output of the adder 602 is then passed to a first accumulator 603, which integrates the signal over time. The accumulated value is compared to a threshold in a comparator module 604, which determines whether the current signal is greater than the modulus M (a threshold used by the modulator). If the accumulated value exceeds the threshold, the comparator module 604 generates a clock strobe output 606. This output is also fed back through a first multiplier 605, which scales the output by the number of windows M. The scaled feedback signal is then subtracted from the input at the first adder 602, completing the feedback loop. This architecture may allow for precise control of the clock frequency by adjusting the skip ratio input 601, which may be updated for each audio frame based on the desired clock frequency stored in the lookup table (LUT) 105 of FIG. 4. The modulator may effectively distribute the clock pulses over time, potentially reducing power fluctuations in the system.

FIG. 6B illustrates a second-order delta-sigma modulator architecture for clock generation in a power equalization system. FIG. 6B includes a skip ratio input 607, a first adder 608, a first accumulator 609, a second adder 610, a second accumulator 611, a first comparator module 612, a first multiplier 613, a second multiplier 614, and a clock strobe output 615.The modulator receives a second skip ratio input 607, which represents the desired percentage of clock pulses to be generated during a specific period. This input is fed into a first adder 608, which combines it with feedback signals. The output of the first adder 608 is then passed to a first accumulator 609, which integrates the signal over time. The output of the first accumulator 609 is fed into a second adder 610, which combines it with another feedback signal. The output of the second adder 610 is then passed to a second accumulator 611, providing an additional stage of integration. The accumulated value from the second accumulator 611 is compared to a threshold in a first comparator module 612, which determines whether the current signal is greater than a modulus M2. If the accumulated value exceeds the threshold, the second comparator module 612 generates a clock strobe output 615. This output is fed back through two separate paths: a first multiplier 613, which scales the output by M2 and feeds back to the second adder 610, and a second multiplier 614, which scales the output by a modulus M1 and feeds back to the first adder 608. This dual feedback loop structure may allow for more precise control of the clock frequency and potentially improved noise shaping characteristics compared to the first-order modulator shown in FIG. 6A.

In some examples, the delta-sigma modulators of FIGS. 6A and 6B, as a non-limiting example, may utilize moduli of approximately 8191 for a first accumulator and 8179 for a second accumulator. For example, the associated clock frequency may be set to around 50 MHz. The power spectral density may be integrated up to about 30 kHz, which corresponds to the upper limit of the audio band. These parameters allow for precise control of clock frequencies while minimizing noise in the audible range. In such non-limiting examples, the moduli values and clock frequency can be adjusted based on the specific requirements of the audio processing system to optimize performance and power efficiency.

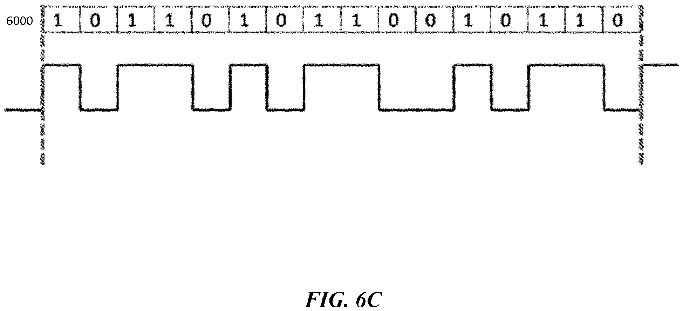

FIG. 6C illustrates a mask register 6000 that could be used as a clock generation circuit with the examples described herein. The mask register 6000 can contain a bit for each clock period, programmed to 1 if the corresponding clock pulse will be generated and 0 if the corresponding clock pulse is to be skipped. Such a mask register 6000 can contain a bit for each clock period in the window time, or alternatively could be a shorter mask which is repeated to make up the entire window time. For example, as shown in FIG. 6C, a 16-bit mask register could be used. In some examples, the mask register 6000 could be programmed to have a density of 1's corresponding to the frequency of the generated clock. Instead of clustering the 1s (which could concentrate the clocking all during one time), the 1s can be spread across the window giving a more even or smooth concentration of clocking. In some examples, both a mask register and a modulator can be employed with a multiplexer that selects between them when operating in different modes. In some embodiments, the disclosed embodiments can utilize one mask register per generated clock, as each clock may have a different target frequency, resulting in a different pattern of skipped pulses.

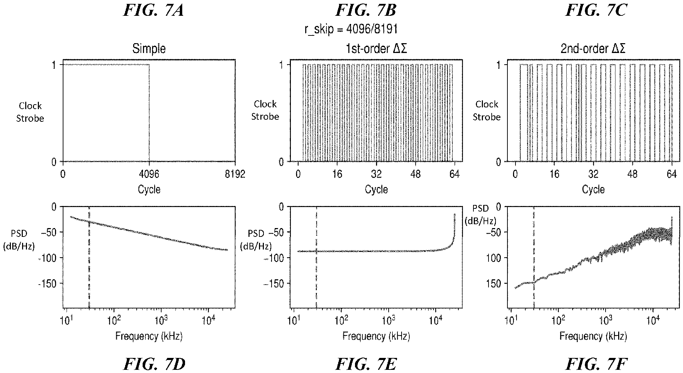

FIGS. 7A-7F are various plots describing the performance of the delta-sigma approaches of FIGS. 6A-6B according to examples of the present disclosure. FIG. 7A shows the resulting clock strobes of a simple clock-skipping approach. The clock strobe waveform may converge as the pulse skip ratio approaches 0 or 1. FIG. 7B illustrates the resulting clock strobes of a first order delta-sigma modulator. The clock strobe pattern may exhibit a more distributed arrangement of pulses compared to the simple approach. FIG. 7C depicts the resulting clock strobes of a second order delta-sigma modulator. The clock strobe pattern may show an even more sophisticated distribution of pulses compared to the first order modulator. FIG. 7D shows the resulting power spectral density (PSD) for the simple clock-skipping approach. The PSD may exhibit a linear decline across the frequency range. FIG. 7E illustrates the resulting PSD for the first order delta-sigma modulator. The PSD may show a relatively flat response at lower frequencies with a sharp rise at higher frequencies. FIG. 7F depicts the resulting PSD for the second order delta-sigma modulator. The PSD may demonstrate a gradually increasing response across the frequency range. For the resulting power spectral density (PSD) shown for the three approaches, respectively, in FIGS. 7D-7F. in FIGS. 7D-7F, the dotted line indicates the edge of the audio band range (about 30 kHz). In this example, the second order delta-sigma modulator had the lowest PSD in the audio range.

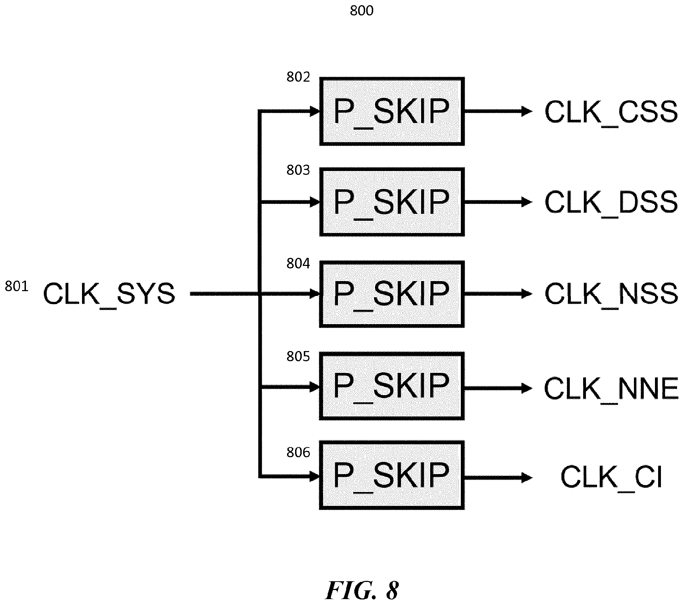

FIG. 8 shows an example clock tree 800 according to examples of the present disclosure. The clock tree 800 may include a system clock 801 that serves as an input clock source. The system clock 801 may connect to multiple pulse skip modules 802-806 arranged in parallel. Each pulse skip module 802-806 may receive the system clock signal and generate a derived clock signal. For example, pulse skip module 802 may output CLK_CSS, pulse skip module 803 may output CLK_DSS, pulse skip module 804 may output CLK_NSS, pulse skip module 805 may output CLK_NNE, and pulse skip module 806 may output CLK_CI. In some aspects, the pulse skip modules 802-806 may be configured to selectively skip clock pulses from the input system clock 801 to generate their respective output clock signals at different frequencies for the digital subsystem circuits.

FIGS. 9A-9B are example lookup tables according to examples of the present disclosure. The lookup table (LUT) 900 shown in FIG. 9A may provide a structured approach for managing power and frequency parameters across different time windows in the audio processing system. The table may include columns for address (ranging from 0 to $K_{MAX}$-1), window width (w) measured in cycles, frequency parameters ($f_1$, $f_2$, ..., $f_N$) represented as pulse skipping ratios, and power measurements ($P_{MIN}$, $P_{MAX}$, $P_{AVG}$) in DC/DC switching cycles. Each row in the table may correspond to a specific window of operation, with the frequency parameters potentially allowing for independent control of multiple subsystem clocks. The power measurements may be stored as read-only values, while the window width and frequency parameters may have read/write access. In some implementations, the LUT may be dynamically updated during system operation to optimize power equalization. The SMU 404 may access the LUT 405 at the beginning of each window to retrieve the appropriate frequency values for the digital subsystem circuits. As the system processes audio frames, it may measure actual power consumption and update the LUT entries accordingly. This adaptive approach may allow the system to refine its power equalization strategy over time, potentially improving efficiency and reducing power fluctuations. The size of the LUT may be configurable based on the number of windows ($K_{MAX}$) and the number of subsystem clocks (N), allowing for flexibility in system design and memory allocation.

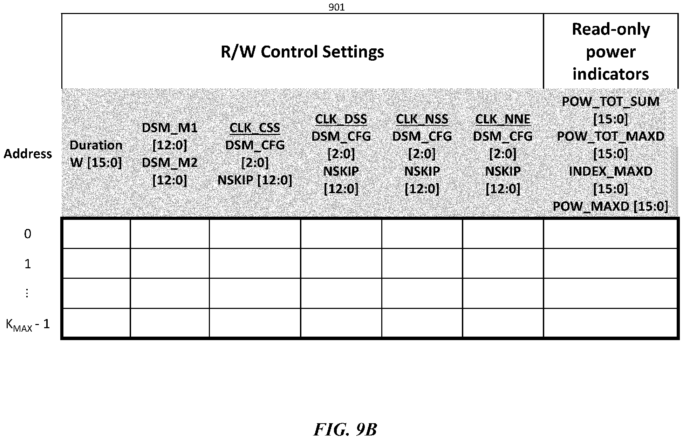

The Look-Up Table (LUT) 901 shown in FIG. 9B is another example data structure designed to manage and control the power equalization system. It contains multiple columns that store critical information for each time window in the power equalization process. The LUT includes an Address column ranging from 0 to $K_{MAX}$ - 1, a Duration column (W[15:0]) to specify the length of each window, a column to specify the delta-sigma modulator moduli (DSM_M1, DSM_M2), and several clock-related control settings columns for different subsystems (CLK_CSS, CLK_DSS, CLK_NSS, and CLK_NNE). Each of these clock columns contains configuration parameters for the Delta-Sigma Modulator (DSM_CFG[2:0]) and the number of clock cycles to skip (NSKIP[12:0]), allowing fine-grained control over the clock frequencies for each subsystem. In addition to the control parameters, the LUT also includes read-only power indicators that provide crucial feedback for the power equalization algorithm. These indicators include the total power sum (POW_TOT_SUM[15:0]), the maximum power difference (POW_TOT_MAXD[15:0]), the index of the maximum difference (INDEX_MAXD[15:0]), and the power summed up from the start of the window to the index of maximum difference (POW_MAXD[15:0]). This structure enables the system to store, manage, and quickly access the necessary data for implementing the power equalization scheme across multiple audio processing frames.

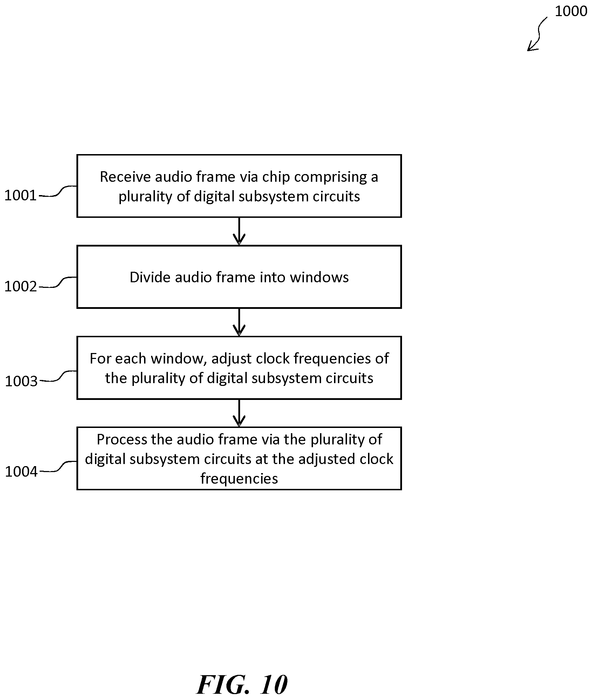

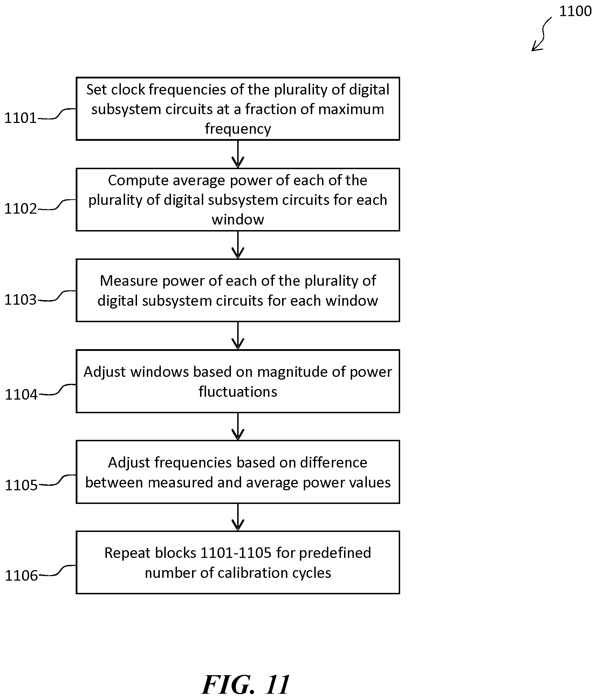

FIG. 10 is a flowchart of an example process 1000 for reducing power fluctuations in an audio device according to examples of the present disclosure. The process 1000 in FIG. 10 includes receiving an audio frame (1001) (e.g., a power profile of an audio frame), dividing the audio frame into windows (1002), adjusting clock frequencies of digital subsystem circuits for each window (1003), and processing the audio frame using the digital subsystem circuits at the adjusted clock frequencies (1004). At block 1001, an audio device can receive an audio frame in which it will process. The audio device can include a plurality of digital subsystem circuits, where each performs certain processing procedures on the audio frame. At block 1002, the process 1000 can include dividing the audio frame into a plurality of windows, where each window can have a different approximate power level. In some examples, the windows can be identically sized. In some examples, the windows can be variably sized via start and end times, which can be programmed into an associated LUT (e.g., LUT 405). In some examples, the size of the windows can be periodically adjusted (see FIG. 11).

At block 1003, the process 1000 can include, for each window of the audio frame, adjusting clock frequencies of the plurality of digital subsystem circuits within the audio device. In particular, the clock frequencies can be adjusted based on a plurality of predetermined frequency values to reduce the power fluctuations within the audio device. In some examples, consistent with the examples discussed herein, adjusting the clock frequencies of the plurality of digital subsystem circuits can include reading, via a clock generation circuit or other clock generator, the plurality of predetermined frequency values from a lookup table (e.g., LUT 405). For example, frequency values for each of the plurality of digital subsystem circuits can be stored in the lookup table for each window of the frame and associated power values. An SMU (e.g., SMU 404) can access the LUT 405 to identify the appropriate frequency values and cause them to be dispersed to the relevant digital subsystem circuits. In some examples, adjusting the frequencies of the digital subsystem circuits can include conditionally skipping clock pulses of a trunk clock to generate a clock for each of the one or more of the plurality of digital subsystem circuits. As discussed above, pulse-skipping can be achieved by various means, such as a mask register, a first order delta-sigma modulator, or a second order delta-sigma modulator, although these are merely exemplary in nature and are not limiting examples. Examples of frequency adjustments can be as follows: during times of higher power usage, the clock frequencies can be decreased, which lengthens the computation time but lowers peak power usage. In another example, during times of lower power usage, the clock frequency can be increased, which speeds up the computation and increases the peak power during that timeframe.

In some non-limiting examples, the adjustments, as performed at block 1003, to the frequency values of the digital subsystem circuits can also be based on the sensitivity of power vs. frequency for the respective circuit blocks. For example, the system can determine the sensitivity by using frequency perturbations. For example, the clock generator might attempt to increase the clock frequency in each circuit domain in sequence and measure the resulting increase in peak power from the changes. In some examples, for idle circuit blocks, increasing the clock frequency may have only a small effect on power used. For busy circuit blocks, increasing the clock frequency can have a larger effect on the power used, indicating higher sensitivity. Once the sensitivities are determined, as a non-limiting example, then the clock generator can factor these into the calculations for the desired clock frequencies. It is important to note that various algorithms exist and this description is only exemplary of one such algorithm.

In additional non-limiting examples of block 1003 of process 1000, the predetermined frequency values can be determined by sensing the power usage of the plurality of digital subsystem circuits during processing of a plurality of various audio frames, determining an average power value for each window of each of the audio frames; and determining a clock frequency value for each average power value. Consistent with the non-limiting examples described herein, various techniques can be used to sense the power usage of the plurality of digital subsystem circuits such as sensing a parasitic wire resistance of a power supply of the audio device; sensing a voltage drop across a header switch of the audio device; sampling a frequency of a switcher in the power supply of the audio device (e.g. estimating the power usage based on an amount of charge transferred by a charge pump within a DC-DC converter of the audio device by accumulating a number of charge pump phases over a time interval and sampling a frequency of the DC-DC converter); or monitoring activity of the plurality of digital subsystem circuits via on-chip activity monitors. Additional details with respect to power sensing techniques are described in relation to FIGS. 5A-5D.

In additional non-limiting examples, additional processing steps to update the predetermined frequency values (e.g., to update the lookup table) can be performed in conjunction with the process 1000. For example, in some examples, the process 1000 can further include periodically measuring a power value for each of the plurality of digital subsystem circuits for each window; determining a clock frequency for each measured power value; and updating the plurality of predetermined clock frequency values based on the determined clock frequencies.

FIG. 11 is a flowchart of an example process 1100 for calibrating an audio device for reducing power fluctuations in an audio device according to examples of the present disclosure. The process 1100 in FIG. 11 includes setting clock frequencies of digital subsystem circuits at a fraction of their maximum frequency values (1101), computing average power of each digital subsystem circuit for each window (1102), measuring power of each digital subsystem circuit for each window (1103), adjusting window sizes based on power fluctuation magnitudes (1104), adjusting frequencies based on differences between measured and average power values (1105), and repeating steps 1101-1105 (1106). In some examples, the process 1100 can be performed prior to the adjusting step of process 1000 in order to initialize and calibrate the audio device. At block 1101, the process 1100 can include setting clock frequencies of each of the plurality of digital subsystem circuits at a fraction of their associated maximum frequency values. In some examples, this fraction can be about one-half. At block 1102, the process 1100 can include computing an average power of each of the plurality of digital subsystem circuits for each window while the circuits process one audio frame. In some examples, these measurements can be performed during processing of more than one audio frames. In some examples, the total average power (i.e., the target power level) can be calculated as follows:

$$P_{AVG} = \frac{\sum P_i W_i}{\sum W_i}$$

Where $P_{AVG}$ represents the total average power across all windows; $P_i$ represents the power measured for an individual window i; $W_i$ represents the width or duration of an individual window i

At block 1103, the process 1100 can include measuring power of each of the plurality of digital subsystem circuits for each window and, at block 1104, adjusting the window sizes based on the magnitude of the power fluctuations. In some examples, resizing the windows can include splitting or merging windows or decreasing/increasing the length of time of certain windows. At block 1105, the process 1100 can include adjusting the frequencies of the plurality of digital subsystem circuits for each window based on the difference between the measured and average power values. In some examples, the frequencies can be updated as follows:

$$f_{i,t+1} = (\frac{P_{AVG}}{P_i})f_{i,t}$$

where $f_{i,t+1}$ represents the updated frequency for window i in the next iteration; $P_{AVG}$ represents the average power across all windows; $P_i$ represents the measured power for window i in the current iteration; $f_{i,t}$ represents the current frequency for window i.

In some non-limiting examples of block 1105 of FIG. 11, the subsystem target power level can also be defined as a function of relative sensitivity, as follows:

$$P_{targ,i} = (\frac{S_i^r}{\sum S_j^r})P_{targ}$$

where $P_{targ,i}$ represents the target power level for subsystem i; $S_i$ may represent the sensitivity of power to frequency changes for subsystem i; r represents an exponent that determines how power targets are assigned based on sensitivity; $P_{targ}$ represents the overall target power level for the system; and a higher r value corresponds to more active subsystems which can be assigned a higher power target.

At block 1106, blocks 1101-1105 can be repeated, such as for a predetermined number of repetitions or any other desired criteria.

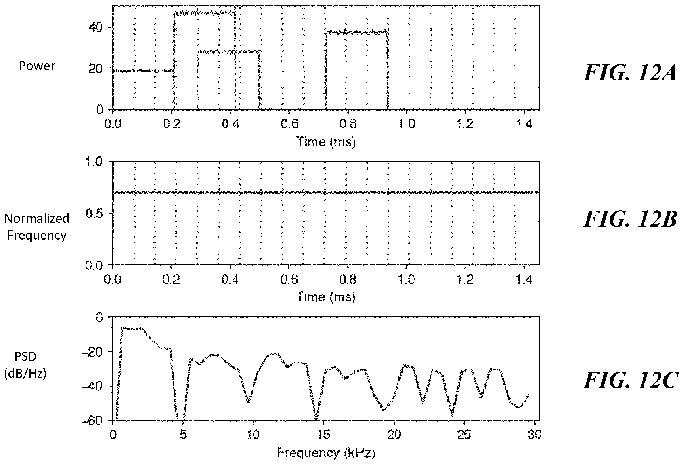

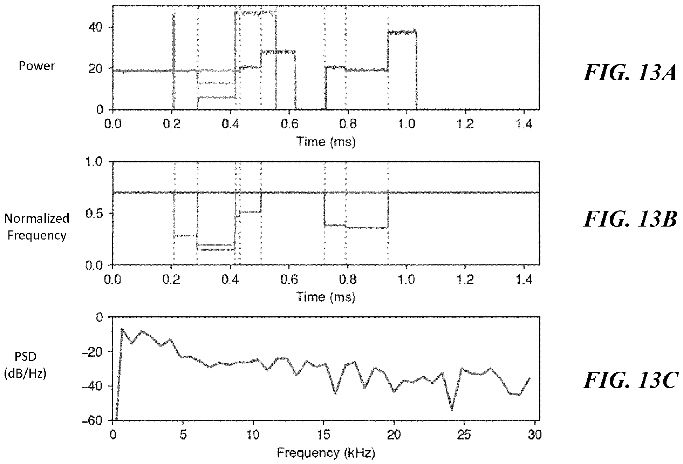

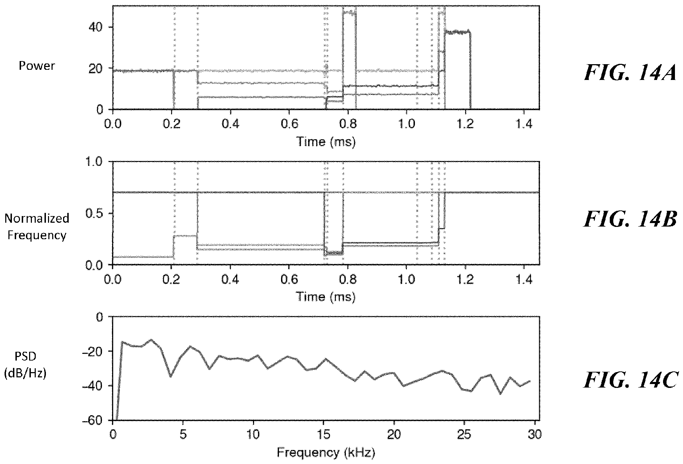

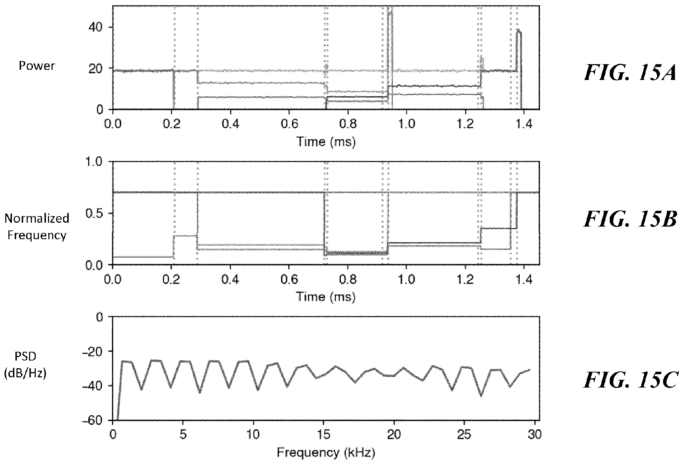

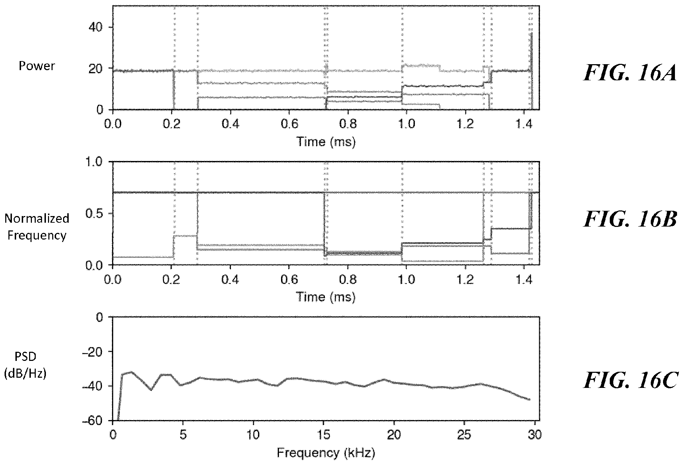

FIGS. 12A-12C, 13A-13C, 14A-14C, 15A-15C, and 16A-16C show simulated waveforms of an audio device according to examples of the present disclosure. FIGS. 12A-12C illustrate the power, normalized frequency, and PSD at iteration 0; 13A-13C illustrate the power, normalized frequency, and PSD at iteration 1; 14A-14C illustrate the power, normalized frequency, and PSD at iteration 5; 15A-15C illustrate the power, normalized frequency, and PSD at iteration 10; and 16A-16C illustrate the power, normalized frequency, and PSD at iteration 15. As can be seen from the graphs, as more and more iterations are performed, the power plot becomes smoother and smoother (i.e. flatter), meaning power fluctuations from the various subsystem circuits within the audio device are being reduced, and variations from the average power are also being reduced. Such a reduction in power fluctuations thereby reduces or eliminates the likelihood of undesirable whistles and tones. With respect to the PSD plots, the peak value (and integrated PSD within the audio band) also is reducing.

The described features can be implemented in one or more computer programs that can be executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, or other unit suitable for use in a computing environment.

Suitable processors for the execution of a program of instructions can include, by way of example, both general and special purpose microprocessors, and the sole processor or one of multiple processors or cores, of any kind of computer. Generally, a processor can receive instructions and data from a read-only memory or a random access memory or both. The essential elements of a computer may include a processor for executing instructions and one or more memories for storing instructions and data. Generally, a computer may also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data may include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

To provide for interaction with a user, the features may be implemented on a computer having a display device such as an LED or LCD monitor for displaying information to the user and a keyboard and a pointing device such as a mouse or a trackball by which the user may provide input to the computer.

The features may be implemented in a computer system that includes a back-end component, such as a data server, or that includes a middleware component, such as an application server or an Internet server, or that includes a front-end component, such as a client computer having a graphical user interface or an Internet browser, or any combination thereof. The components of the system may be connected by any form or medium of digital data communication such as a communication network. Examples of communication networks include, e.g., a telephone network, a LAN, a WAN, and the computers and networks forming the Internet.

The computer system may include clients and servers. A client and server may generally be remote from each other and may typically interact through a network. The relationship of client and server may arise by virtue of computer programs running on the respective computers and having a client-server relationship to each other.

One or more features or steps of the disclosed embodiments may be implemented using an API. An API may define one or more parameters that are passed between a calling application and other software code (e.g., an operating system, library routine, function) that provides a service, that provides data, or that performs an operation or a computation.

The API may be implemented as one or more calls in program code that send or receive one or more parameters through a parameter list or other structure based on a call convention defined in an API specification document. A parameter may be a constant, a key, a data structure, an object, an object class, a variable, a data type, a pointer, an array, a list, or another call. API calls and parameters may be implemented in any programming language. The programming language may define the vocabulary and calling convention that a programmer will employ to access functions supporting the API.

In some implementations, an API call may report to an application the capabilities of a device running the application, such as input capability, output capability, processing capability, power capability, communications capability, etc.

While various embodiments have been described above, it should be understood that they have been presented by way of example and not limitation. It will be apparent to persons skilled in the relevant art(s) that various changes in form and detail may be made therein without departing from the spirit and scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

In addition, it should be understood that any figures which highlight the functionality and advantages are presented for example purposes only. The disclosed methodology and system are each sufficiently flexible and configurable such that they may be utilized in ways other than that shown.

Although the term "at least one" may often be used in the specification, claims and drawings, the terms "a", "an", "the", "said", etc. also signify "at least one" or "the at least one" in the specification, claims and drawings.

Finally, it is the applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

Numbered Clauses

By way of non-limiting example, some aspects of the disclosure are set out in the following numbered clauses.

Numbered Clause 1. A method for reducing power fluctuations in an audio device comprising:

receiving, via the audio device, a power profile of an audio frame, the audio device comprising a plurality of digital subsystem circuits;
dividing the audio frame into a plurality of windows;
for each of the plurality of windows, adjusting a clock frequency of one or more of the plurality of digital subsystem circuits based on a plurality of predetermined clock frequency values set to reduce power fluctuations in the audio frame; and
processing the audio frame via the plurality of digital subsystem circuits at the adjusted clock frequencies for each window.

Numbered Clause 2. The method of Numbered Clause 1, further comprising:

periodically measuring a power value for each of the plurality of digital subsystem circuits for each window;
determining a clock frequency for each measured power value; and
updating the plurality of predetermined clock frequency values based on determined clock frequencies.

Numbered Clause 3. The method of Numbered Clause 1 or 2, wherein adjusting the clock frequency of each of the plurality of digital subsystem circuits based on the plurality of predetermined clock frequency values comprises reading, via a clock generator, the plurality of predetermined clock frequency values from a look-up table.

Numbered Clause 4. The method of Numbered Clause 3, wherein adjusting the clock frequency of the one or more of the plurality of digital subsystem circuits comprises conditionally skipping clock pulses of a trunk clock to generate a clock for each of the one or more of the plurality of digital subsystem circuits.

Numbered Clause 5. The method of Numbered Clause 4, wherein the clock generator comprises at least one mask register and conditionally skipping the clock pulses of the trunk clock comprises skipping the clock pulses via the mask register comprising a bit for each relevant clock period and a density of 1's corresponding to a frequency of an associated generated clock.

Numbered Clause 6. The method of Numbered Clause 4 or 5, wherein the clock generator comprises a delta-sigma modulator and conditionally skipping the clock pulses of the trunk clock comprises feeding an input representing a percentage of total clock pulses to be generated to the delta-sigma modulator.

Numbered Clause 7. The method of Numbered Clause 6, wherein feeding the input representing the percentage of total clock pulses to be generated to the delta-sigma modulator comprises feeding the input representing the percentage of total clock pulses to be generated to a second-order delta-sigma modulator.

Numbered Clause 8. The method of any preceding Numbered Clause, comprising, prior to the adjusting step:

>setting a clock frequency of each of the plurality of digital subsystem circuits at a fraction of a respective maximum frequency value;
>computing, for each window, an average power value of each of the plurality of digital subsystem circuits;
>measuring, for each window, a power value of each of the plurality of digital subsystem circuits;
>adjusting a size of at least a portion of the plurality of windows based on a magnitude of power fluctuations;
>adjusting a frequency of each of the plurality of digital subsystem circuits based on a difference between the respective measured and average power values; and
>repeating the computing, measuring, and adjusting steps a predefined number of times.

Numbered Clause 9. The method of any preceding Numbered Clause, wherein the plurality of predetermined clock frequency values are determined by:

>sensing power usage of the plurality of digital subsystem circuits during processing of a plurality of previous audio frames;
>determining an average power value for each window of each of the plurality of previous audio frames; and
>determining a clock frequency value for each average power value.

Numbered Clause 10. The method of Numbered Clause 9, wherein sensing the power usage comprises at least one of:

>sensing a parasitic wire resistance of a power supply of the audio device;
>sensing a voltage drop across at least one header switch of the audio device;
>sampling a frequency of a switcher in the power supply of the audio device; or
>monitoring activity of the plurality of digital subsystem circuits via on-chip activity monitors

Numbered Clause 11. A processing system for reducing power fluctuations in an audio device comprising:

>a processor; and
>a non-transitory computer-readable storage device storing computer-executable instructions, the instructions when executed by the processor cause the processor to perform operations comprising:
>
>>receiving, via the audio device, a power profile of an audio frame, the audio device comprising a plurality of digital subsystem circuits;
>>dividing the audio frame into a plurality of windows;
>>for each of the plurality of windows, adjusting a clock frequency of one or more of the plurality of digital subsystem circuits based on a plurality of predetermined clock frequency values set to reduce power fluctuations in the audio frame; and
>>processing the audio frame via the plurality of digital subsystem circuits at the adjusted clock frequencies for each window.

Numbered Clause 12. The processing system of Numbered Clause 11, wherein the operations further comprise:

>periodically measuring a power value for each of the plurality of digital subsystem circuits for each window;
>determining a clock frequency for each measured power value; and
>updating the plurality of predetermined clock frequency values based on determined clock frequencies.

Numbered Clause 13. The processing system of Numbered Clause 11 or 12, wherein adjusting the clock frequency of each of the plurality of digital subsystem circuits based on the plurality of predetermined clock frequency values comprises reading, via a clock generator, the plurality of predetermined clock frequency values from a look-up table.

Numbered Clause 14. The processing system of Numbered Clause 13, wherein adjusting the clock frequency of the one or more of the plurality of digital subsystem circuits comprises conditionally skipping clock pulses of a trunk clock to generate a clock for each of the one or more of the plurality of digital subsystem circuits.

Numbered Clause 15. The processing system of Numbered Clause 14, wherein the clock generator comprises at least one mask register and conditionally skipping the clock pulses of the trunk clock comprises skipping the clock pulses via the mask register comprising a bit for each relevant clock period and a density of 1's corresponding to a frequency of an associated generated clock.

Numbered Clause 16. The processing system of Numbered Clause 14 or 15, wherein the clock generator comprises a delta-sigma modulator and conditionally skipping the clock pulses of the trunk clock comprises feeding an input representing a percentage of total clock pulses to be generated to the delta-sigma modulator.

Numbered Clause 17. The processing system of Numbered Clause 16, wherein feeding the input representing the percentage of total clock pulses to be generated to the delta-sigma modulator comprises feeding the input representing the percentage of total clock pulses to be generated to a second-order delta-sigma modulator.

Numbered Clause 18. The processing system of any of Numbered Clauses 11 to 17, wherein the operations comprise, prior to the adjusting step:

setting a clock frequency of each of the plurality of digital subsystem circuits at a fraction of a respective maximum frequency value;
computing, for each window, an average power value of each of the plurality of digital subsystem circuits;
measuring, for each window, a power value of each of the plurality of digital subsystem circuits;
adjusting a size of at least a portion of the plurality of windows based on a magnitude of power fluctuations;
adjusting a frequency of each of the plurality of digital subsystem circuits based on a difference between the respective measured and average power values; and
repeating the computing, measuring, and adjusting steps a predefined number of times.

Numbered Clause 19. The processing system of any of Numbered Clauses 11 to 18, wherein the plurality of predetermined clock frequency values are determined by:

sensing power usage of the plurality of digital subsystem circuits during processing of a plurality of previous audio frames;
determining an average power value for each window of each of the plurality of previous audio frames; and
determining a clock frequency value for each average power value.

Numbered Clause 20. The processing system of Numbered Clause 19, wherein sensing the power usage comprises at least one of:

sensing a parasitic wire resistance of a power supply of the audio device;
sensing a voltage drop across at least one header switch of the audio device;
sampling a frequency of a switcher in the power supply of the audio device; or monitoring activity of the plurality of digital subsystem circuits via on-chip activity monitors.

## Claims

1. A method for reducing power fluctuations in an audio device comprising:

receiving, via the audio device, a power profile of an audio frame, the audio device comprising a plurality of digital subsystem circuits;
dividing the audio frame into a plurality of windows;
for each of the plurality of windows, adjusting a clock frequency of one or more of the plurality of digital subsystem circuits based on a plurality of predetermined clock frequency values set to reduce power fluctuations in the audio frame; and
processing the audio frame via the plurality of digital subsystem circuits at the adjusted clock frequencies for each window.

2. The method of claim 1, further comprising:

periodically measuring a power value for each of the plurality of digital subsystem circuits for each window;
determining a clock frequency for each measured power value; and
updating the plurality of predetermined clock frequency values based on determined clock frequencies.

3. The method of claim 1 or 2, wherein adjusting the clock frequency of each of the plurality of digital subsystem circuits based on the plurality of predetermined clock frequency values comprises reading, via a clock generator, the plurality of predetermined clock frequency values from a look-up table.

4. The method of claim 3, wherein adjusting the clock frequency of the one or more of the plurality of digital subsystem circuits comprises conditionally skipping clock pulses of a trunk clock to generate a clock for each of the one or more of the plurality of digital subsystem circuits.

5. The method of claim 4, wherein the clock generator comprises at least one mask register and conditionally skipping the clock pulses of the trunk clock comprises skipping the clock pulses via the mask register comprising a bit for each relevant clock period and a density of 1's corresponding to a frequency of an associated generated clock.

6. The method of claim 4 or 5, wherein the clock generator comprises a delta-sigma modulator and conditionally skipping the clock pulses of the trunk clock comprises feeding an input representing a percentage of total clock pulses to be generated to the delta-sigma modulator,
preferably wherein feeding the input representing the percentage of total clock pulses to be generated to the delta-sigma modulator comprises feeding the input representing the percentage of total clock pulses to be generated to a second-order delta-sigma modulator.

7. The method of any preceding claim, comprising, prior to the adjusting step:

setting a clock frequency of each of the plurality of digital subsystem circuits at a fraction of a respective maximum frequency value;
computing, for each window, an average power value of each of the plurality of digital subsystem circuits;
measuring, for each window, a power value of each of the plurality of digital subsystem circuits;
adjusting a size of at least a portion of the plurality of windows based on a magnitude of power fluctuations;
adjusting a frequency of each of the plurality of digital subsystem circuits based on a difference between the respective measured and average power values; and
repeating the computing, measuring, and adjusting steps a predefined number of times.

8. The method of any preceding claim, wherein the plurality of predetermined clock frequency values are determined by:

sensing power usage of the plurality of digital subsystem circuits during processing of a plurality of previous audio frames;
determining an average power value for each window of each of the plurality of previous audio frames; and
determining a clock frequency value for each average power value,
preferably wherein sensing the power usage comprises at least one of:

sensing a parasitic wire resistance of a power supply of the audio device;
sensing a voltage drop across at least one header switch of the audio device;
sampling a frequency of a switcher in the power supply of the audio device; or
monitoring activity of the plurality of digital subsystem circuits via on-chip activity monitors

9. A processing system for reducing power fluctuations in an audio device comprising:

a processor; and
a non-transitory computer-readable storage device storing computer-executable instructions, the instructions when executed by the processor cause the processor to perform operations comprising:

receiving, via the audio device, a power profile of an audio frame, the audio device comprising a plurality of digital subsystem circuits;
dividing the audio frame into a plurality of windows;
for each of the plurality of windows, adjusting a clock frequency of one or more of the plurality of digital subsystem circuits based on a plurality of predetermined clock frequency values set to reduce power fluctuations in the audio frame; and
processing the audio frame via the plurality of digital subsystem circuits at the adjusted clock frequencies for each window.

10. The processing system of claim 9, wherein the operations further comprise:

periodically measuring a power value for each of the plurality of digital subsystem circuits for each window;
determining a clock frequency for each measured power value; and

updating the plurality of predetermined clock frequency values based on determined clock frequencies.

11. The processing system of claim 9 or 10, wherein adjusting the clock frequency of each of the plurality of digital subsystem circuits based on the plurality of predetermined clock frequency values comprises reading, via a clock generator, the plurality of predetermined clock frequency values from a look-up table.

12. The processing system of claim 11, wherein adjusting the clock frequency of the one or more of the plurality of digital subsystem circuits comprises conditionally skipping clock pulses of a trunk clock to generate a clock for each of the one or more of the plurality of digital subsystem circuits.

13. The processing system of claim 11 or 12, wherein the clock generator comprises at least one mask register and conditionally skipping the clock pulses of the trunk clock comprises skipping the clock pulses via the mask register comprising a bit for each relevant clock period and a density of 1's corresponding to a frequency of an associated generated clock,

preferably wherein the clock generator comprises a delta-sigma modulator and conditionally skipping the clock pulses of the trunk clock comprises feeding an input representing a percentage of total clock pulses to be generated to the delta-sigma modulator,

more preferably wherein feeding the input representing the percentage of total clock pulses to be generated to the delta-sigma modulator comprises feeding the input representing the percentage of total clock pulses to be generated to a second-order delta-sigma modulator.

14. The processing system of any of claims 9 to 13, wherein the operations comprise, prior to the adjusting step:

setting a clock frequency of each of the plurality of digital subsystem circuits at a fraction of a respective maximum frequency value;

computing, for each window, an average power value of each of the plurality of digital subsystem circuits;

measuring, for each window, a power value of each of the plurality of digital subsystem circuits;

adjusting a size of at least a portion of the plurality of windows based on a magnitude of power fluctuations;

adjusting a frequency of each of the plurality of digital subsystem circuits based on a difference between the respective measured and average power values; and

repeating the computing, measuring, and adjusting steps a predefined number of times.

15. The processing system of any of claims 9 to 14, wherein the plurality of predetermined clock frequency values are determined by:

sensing power usage of the plurality of digital subsystem circuits during processing of a plurality of previous audio frames;

determining an average power value for each window of each of the plurality of previous audio frames; and

determining a clock frequency value for each average power value,

preferably wherein sensing the power usage comprises at least one of:

sensing a parasitic wire resistance of a power supply of the audio device;

sensing a voltage drop across at least one header switch of the audio device;

sampling a frequency of a switcher in the power supply of the audio device; or

monitoring activity of the plurality of digital subsystem circuits via on-chip activity monitors.

FIG. 1B

*FIG. 1A*

Power

Audio frame 0 — Audio frame 1 — Audio frame 2

Time

FFT

Frequency (kHz)

*FIG. 1C*

VDD POWER SUPPLY TERMINAL    200

SUPPLY VOLTAGE REGULATOR  201

LOW-VOLTAGE LOW-POWER CURRENT SENSOR  202

PROGRAMMABLE TARGET CURRENT RANGE MODULE  206

FEEDBACK CURRENT DETECTION MODULE  207

MEMORY  204

CPU WITH CURRENT FLATTENING SUPPORT ARCHITECTURE  203

211  RESET

CLOCK FREQUENCY REGULATOR  208

I/O CONTROLLER  205

I/O

MICROCONTROLLER  209

GND TERMINAL
210

*FIG. 2*

**FIG. 3A**

*FIG. 3B*

400

$V_{in}$

DC-DC Controller
401

Charge Pump
403

$CTRL_{DIG}$

Power Estimator
402

VDDL

2

409

SMU
404

3    LUT
405

$CLK_{CSS}$  1

$CLK_{DSS}$  1

$CLK_{NSS}$  1

$CLK_{NNE}$  1

CSS
406

DSS
407

NSS
408

**FIG. 4**

*FIG. 5A*

*FIG. 5B*

DC-DC
Controller
509

$N_{PHASE}$
(0/1/2/4)

510
Acc

Charge
pump
511

512 VDDL

*FIG. 5C*

513
Select
internal
signals

Activity
monitor

Activity
monitor

Activity
monitor

Activity
monitor

514a-d

515
Power
calculator

Subsystem

*FIG. 5D*

## First-order

*FIG. 6A*

## Second-order

*FIG. 6B*

*FIG. 6C*

### FIG. 7A

Simple

Clock
Strobe

1

0

0        4096        8192

Cycle

### FIG. 7B

r_skip = 4096/8191

1st-order ΔΣ

Clock
Strobe

1

0

0    16    32    48    64

Cycle

### FIG. 7C

2nd-order ΔΣ

Clock
Strobe

1

0

0    16    32    48    64

Cycle

PSD
(dB/Hz)

0

−50

-100

-150

$10^1$    $10^2$    $10^3$    $10^4$

Frequency (kHz)

PSD
(dB/Hz)

0

−50

−100

-150

$10^1$    $10^2$    $10^3$    $10^4$

Frequency (kHz)

PSD
(dB/Hz)

0

−50

100

150

$10^1$    $10^2$    $10^3$    $10^4$

Frequency (kHz)

### FIG. 7D

### FIG. 7E

### FIG. 7F

800

802 **P_SKIP** → CLK_CSS

803 **P_SKIP** → CLK_DSS

801 CLK_SYS

804 **P_SKIP** → CLK_NSS

805 **P_SKIP** → CLK_NNE

806 **P_SKIP** → CLK_CI

*FIG. 8*

900

| Address | w | f$_1$ | f$_2$ | ... | f$_N$ | P$_{MIN}$ | P$_{MAX}$ | P$_{AVG}$ |
|---|---|---|---|---|---|---|---|---|
| 0 | 10000 | 3 | 0 | | 5 | 300 | 450 | 400 |
| 1 | 2500 | 6 | 12 | | 5 | 100 | 120 | 105 |
| ⋮ | | | | | | | | |
| K$_{MAX}$ - 1 | 4000 | 9 | 20 | | 5 | 10 | 20 | 16 |

| | Window width (in cycles) | Subsystem frequencies (pulse skipping ratio) | | Power (in DC/DC switching cycles) | |
|---|---|---|---|---|---|
| **Description** | | | | | |
| **Bit width** | 16 | 8 (each) | | 32 (each) | |
| **SW Read/Write Access** | R/W | R/W | | Read-only | |

*FIG. 9A*

901

| Address | R/W Control Settings | | | | | | Read-only power indicators |
|---|---|---|---|---|---|---|---|
| | Duration W [15:0] | DSM_M1 [12:0] DSM_M2 [12:0] | CLK_CSS DSM_CFG [2:0] NSKIP [12:0] | CLK_DSS DSM_CFG [2:0] NSKIP [12:0] | CLK_NSS DSM_CFG [2:0] NSKIP [12:0] | CLK_NNE DSM_CFG [2:0] NSKIP [12:0] | POW_TOT_SUM [15:0] POW_TOT_MAXD [15:0] INDEX_MAXD [15:0] POW_MAXD [15:0] |
| 0 | | | | | | | |
| 1 | | | | | | | |
| ⋮ | | | | | | | |
| $K_{MAX}$ - 1 | | | | | | | |

*FIG. 9B*

1000

1001 — Receive audio frame via chip comprising a plurality of digital subsystem circuits

1002 — Divide audio frame into windows

1003 — For each window, adjust clock frequencies of the plurality of digital subsystem circuits

1004 — Process the audio frame via the plurality of digital subsystem circuits at the adjusted clock frequencies

*FIG. 10*

1100

1101 — Set clock frequencies of the plurality of digital subsystem circuits at a fraction of maximum frequency

1102 — Compute average power of each of the plurality of digital subsystem circuits for each window

1103 — Measure power of each of the plurality of digital subsystem circuits for each window

1104 — Adjust windows based on magnitude of power fluctuations

1105 — Adjust frequencies based on difference between measured and average power values

1106 — Repeat blocks 1101-1105 for predefined number of calibration cycles

## FIG. 11

Power

*FIG. 12A*

Time (ms)

Normalized
Frequency

*FIG. 12B*

Time (ms)

PSD
(dB/Hz)

*FIG. 12C*

Frequency (kHz)

Power

*FIG. 13A*

Time (ms)

Normalized
Frequency

*FIG. 13B*

Time (ms)

PSD
(dB/Hz)

*FIG. 13C*

Frequency (kHz)

Power

*FIG. 14A*

Normalized
Frequency

*FIG. 14B*

PSD
(dB/Hz)

*FIG. 14C*

*FIG. 15A*

*FIG. 15B*

*FIG. 15C*

Power

*FIG. 16A*

Normalized
Frequency

*FIG. 16B*

PSD
(dB/Hz)

*FIG. 16C*

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/055921 A1 (SEBOT JULIEN [US] ET AL) 25 February 2021 (2021-02-25) * paragraph [0036] - paragraph [0055]; figures 2-10 * | 1-15 | INV. G06F1/3206 G06F1/324 |
| A | US 2011/314312 A1 (NAFFZIGER SAMUEL D [US] ET AL) 22 December 2011 (2011-12-22) * paragraph [0018] - paragraph [0050]; figures 1-5 * | 1-15 | |
| A | US 2003/084353 A1 (CHANG NORMAN [US] ET AL) 1 May 2003 (2003-05-01) * paragraph [0017] - paragraph [0035]; figures 1-4 * | 1-15 | |
| A | US 2007/198864 A1 (TAKASE SATORU [US]) 23 August 2007 (2007-08-23) * paragraph [0030] - paragraph [0099]; figures 1-6 * | 1-15 | |

TECHNICAL FIELDS
SEARCHED      (IPC)

G06F

The present search report has been drawn up for all claims

| Place of search | Date of completion of the search | Examiner |
|---|---|---|
| Munich | 6 June 2025 | Alonso Nogueiro, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................
& : member of the same patent family, corresponding
document

EPO FORM 1503 03.82 (P04C01)

# EP 4 597 259 A1

## ANNEX TO THE EUROPEAN SEARCH REPORT
## ON EUROPEAN PATENT APPLICATION NO.

EP 25 15 5198

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2025

| Patent document cited in search report | Publication date | Patent family member(s) | Publication date |
|---|---|---|---|
| US 2021055921 A1 | 25-02-2021 | CN 114144746 A | 04-03-2022 |
| | | EP 4018287 A1 | 29-06-2022 |
| | | KR 20220051159 A | 26-04-2022 |
| | | US 2021055921 A1 | 25-02-2021 |
| | | WO 2021040885 A1 | 04-03-2021 |
| US 2011314312 A1 | 22-12-2011 | CN 102971687 A | 13-03-2013 |
| | | EP 2583151 A1 | 24-04-2013 |
| | | JP 5676759 B2 | 25-02-2015 |
| | | JP 2013533548 A | 22-08-2013 |
| | | KR 20130088132 A | 07-08-2013 |
| | | US 2011314312 A1 | 22-12-2011 |
| | | WO 2011163261 A1 | 29-12-2011 |
| US 2003084353 A1 | 01-05-2003 | NONE | |
| US 2007198864 A1 | 23-08-2007 | JP 2007249961 A | 27-09-2007 |
| | | US 2007198864 A1 | 23-08-2007 |

EPO FORM P0459

For more details about this annex : see Official Journal of the European Patent Office, No. 12/82

**EP 4 597 259 A1**

**Patent documents cited in the description**

- US 63548803